# EUROPÄISCHE PATENTSCHRIFT

(11) **EP 3 445 965 B1**
(45) Veröffentlichungstag und Bekanntmachung des Hinweises auf die Patenterteilung: **05.06.2024**
(21) Anmeldenummer: 17706747.7
(22) Anmeldetag: 22.02.2017
(51) Int. Cl.: F16H 25/20, F02M 26/54, F02M 26/72

(54) **AGR-VENTIL FÜR EINE VERBRENNUNGSKRAFTMASCHINE**
EGR VALVE FOR AN INTERNAL COMBUSTION ENGINE
VANNE EGR POUR MOTEUR À COMBUSTION INTERNE

(30) Priorität: 18.04.2016 DE 102016107123
(43) Veröffentlichungstag der Anmeldung: 27.02.2019
(73) Patentinhaber: Pierburg GmbH, 41460 Neuss (DE)
(72) Erfinder: SIMONS, Norbert, 40233 Düsseldorf (DE); HEMSING, Axel, 40545 Düsseldorf (DE); BOHNEN, Manfred, 41189 Mönchengladbach (DE)
(74) Vertreter: terpatent Patentanwälte und European Patent Attorneys ter Smitten Eberlein -Van Hoof
(86) Internationale Anmeldenummer: PCT/EP2017/054004
(87) Internationale Veröffentlichungsnummer: WO 2017/182172

(56) Entgegenhaltungen:
- EP-A1- 1 482 224
- EP-A2- 0 829 638
- WO-A1-88/07625
- DE-A1-102008 053 573
- DE-A1-102014 106 517
- JP-A- H10 248 202
- US-A- 5 606 957
- US-A1- 2008 218 158

## Beschreibung

Die vorliegende Erfindung betrifft ein AGR-Ventil für eine Verbrennungskraftmaschine mit einem Gehäuse, einer Ventilstange, welche als Spindel mit einem Außengewinde ausgebildet ist, und welche zumindest teilweise im Gehäuse angeordnet ist, einem Ventilkörper, der auf der Ventilstange angeordnet ist, und der zur Regelung eines Durchströmungsquerschnitts auf einen Ventilsitz absenkbar ist oder vom Ventilsitz abhebbar ist, einem Elektromotor, welcher eine Spindelmutter antreibt, die in das Außengewinde der Ventilstange greift, und ein Federelement, welches den Ventilkörper in Richtung des Ventilsitzes belastet.

Derartige Ventilvorrichtungen zur Abgasrückführung sind bekannt und dienen zur Regelung einer in die Verbrennungsräume eines Verbrennungsmotors zurückgeführten Abgasmenge zur Reduzierung von Schadstoffemissionen.

Aus der WO 88/07625 ist ein AGR-Ventil für eine Verbrennungskraftmaschine bekannt, bei welchem eine als Spindel ausgeformte Stellwelle einen Ventilkörper verstellt, um eine Öffnung eines Abgaskanals zu öffnen oder zu verschließen. Die Spindel ist verstellbar über einen als Spindelmutter ausgebildeten und von einem Elektromotor angetriebenen Rotor, welcher im Gewindeeingriff mit einem Außengewinde der Spindel ist. Um die Zuverlässigkeit des AGR-Ventils zu erhöhen wurde für den Störungsfall des Elektromotors eine Flachspiralfeder mit Windungszwischenraum derart zwischen einem Gehäuse des AGR-Ventils und dem Rotor gespannt, so dass eine Kraft in Richtung der Öffnung auf die Ventilstange wirkt.

Des Weiteren ist aus der JP H10 248202 A ein Abgasrückführventil bekannt, welches einen Spindeltrieb aufweist, der über einen Elektromotor angetrieben wird. Eine Rückstellung des Ventils in eine geschlossene Sicherheitsposition erfolgt auch hier mittels einer Flachspiralfeder ohne Windungsberührung, die zwischen dem Gehäuse des Ventils und einer Rotorscheibe eingespannt ist.

Aus der US 5,606,957 ist ein Abgashubventil bekannt, bei dem eine Spindelmutter mittels eines Schrittmotors über ein Kupplung gedreht wird. Im Innern der Spindelmutter ist eine Ventilstange mit Außengewinde angeordnet. Eine Flachdrehfeder ohne Windungsberührung dient zur Rückstellung. Entsprechend sind nur sehr kleine Öffnungsspalte realisierbar.

Der Stand der Technik hat das Problem, dass es zu einer Hemmung in rotatorischer Richtung der Spindelmutter kommen kann, da eine große Gewindesteigung verwendet werden muss, um einen ausreichend großen Hub zu realisieren. Die große Gewindesteigung hat zur Folge, dass große Stellkräfte benötigt werden, um die Spindelmutter zu drehen. Dadurch muss ein größerer Motor und eine größere Flachspiralfeder verwendet werden, wodurch das AGR-Ventil größer wird. Durch die große Gewindesteigung besteht zudem die Gefahr eines ungewollten Öffnens des AGR-Ventils bei großen, axial wirkenden Pulsationen des Abgases.

Die Aufgabe der vorliegenden Erfindung liegt somit darin, ein verbessertes AGR-Ventil für eine Verbrennungskraftmaschine zu schaffen, bei welchem eine Hemmung der Spindelmutter in rotatorischer Richtung vermieden wird und welches einen möglichst geringen Bauraum benötigt. Zudem liegt die Aufgabe der vorliegenden Erfindung darin, die zur Verstellung der Spindelmutter benötigten Kräfte zu reduzieren und ein ungewolltes Öffnen des AGR-Ventils zu vermeiden.

Diese Aufgabe wird durch ein AGR-Ventil für eine Verbrennungskraftmaschine mit den Merkmalen des Anspruchs 1 gelöst.

Bei dem erfindungsgemäßen AGR-Ventil ist das Federelement eine Flachspiralfeder mit Windungsberührung, welche zwischen der Spindelmutter und dem Gehäuse derart eingespannt ist, dass eine Kraft in Richtung des Ventilsitzes auf die Ventilstange wirkt. Eine Flachspiralfeder mit Windungsberührung ist eine Flachspiralfeder, welche im Wesentlichen keine Windungszwischenräume aufweist. Bei einer solchen Feder liegen die Windungen sowohl in einem nicht aufgezogenen Zustand als auch in einem aufgezogenen Zustand aneinander an. Die Flachspiralfeder übt erfindungsgemäß auf die Spindelmutter ein Drehmoment aus, welches zu einer Kraft der Ventilstange in Richtung des Ventilsitzes führt. Eine Flachspiralfeder mit Windungsberührung lässt eine Mehrzahl von Umdrehungen der Spindelmutter zum Gehäuse zu. Dadurch kann für einen bestimmten Hub der Ventilstange, verglichen mit einer Flachspiralfeder mit Windungszwischenraum, welche im Allgemeinen nur etwa eine Umdrehung zulässt, eine geringere Gewindesteigung gewählt werden. Entsprechend weisen das Außengewinde der Ventilstange und ein Innengewinde der Spindelmutter einen Gewindesteigungswinkel von kleiner gleich 15° auf. Diese geringere Gewindesteigung führt dazu, dass das erforderliche Drehmoment zum Drehen der Spindelmutter geringer ist und eine Hemmung in rotatorischer Richtung des Spindeltriebs entfällt, so dass eine kleinere Flachspiralfeder verwendbar ist. Dadurch kann der Bauraum des AGR-Ventils reduziert werden. Zusätzlich ist das AGR-Ventil mit der geringeren Gewindesteigung genauer einstellbar, so dass die Einstellbarkeit des AGR-Ventils verbessert ist. Durch eine geringe Gewindesteigung kann zudem auch aufgrund der geringeren zu überwindenden Kräfte ein kleinerer Elektromotor verwendet werden, wodurch wiederum der Bauraum des AGR-Ventils reduziert wird. Bei dem gewählten Gewindesteigungswinkel tritt bei dem erfindungsgemäßen AGR-Ventil eine Selbsthemmung auf, d.h. die Ventilstange wird bei einer axialen Kraft, beispielsweise durch den Druck des Abgases, nicht in axialer Richtung bewegt. Darüber hinaus ist bei einem solchen Gewindesteigungswinkel das Verhältnis zwischen Verdrehwinkel der Spindelmutter zu erzielten Hub der Ventilstange groß. Dadurch kann die axiale Position des Ventilkörpers sehr fein eingestellt werden, wodurch eine verbesserte Regelbarkeit des AGR-Ventils resultiert. Da die Übersetzung zwischen Drehung der Spindelmutter und Hub der Ventilstange groß ist, ist ein geringeres Antriebsmoment der Spindelmutter notwendig, so dass der Elektromotor kleiner dimensioniert werden kann. Dadurch kann das AGR-Ventil platzsparender vorgesehen werden. Des Weiteren ist an einem dem Ventilkörper gegenüberliegenden axialen Ende der Ventilstange eine axial beweglich geführte Verdrehsicherung innerhalb des Gehäuses ausgebildet.

In einer bevorzugten Ausführung der Erfindung ist die Flachspiralfeder für 3-9 Umdrehungen der Spindelmutter relativ zum Gehäuse ausgelegt. Die Flachspiralfeder vollzieht somit eine Mehrzahl an Umdrehungen, so dass für die Erzielung eines bestimmten Hubes eine flache Gewindesteigung gewählt werden kann. Dadurch wird eine Hemmung der Spindelmutter in rotatorischer Richtung vermieden.

Vorzugsweise ist die Flachspiralfeder zwischen dem Elektromotor und dem Ventilkörper angeordnet. Dadurch wird die Montage des AGR-Ventils erleichtert.

In einer weiteren bevorzugten Ausführung sind in dem Gehäuse Kühlkanäle ausgebildet, welche mit einem Kühlkreislauf verbunden sind. Dadurch kann das AGR-Ventil gekühlt werden. Eine solche Kühlung ist insbesondere wichtig, da sich das AGR-Ventil durch den direkten Kontakt des Ventilkörpers mit dem heißen Abgas und der Wärmeleitung über die Ventilstange sowie durch den Betrieb des Elektromotors aufheizt. Durch die Kühlung werden zudem die Wicklungen des Stators des Elektromotors gekühlt, wodurch die Leistung des Elektromotors erhöht werden kann.

Vorzugsweise ist der Elektromotor ein EC-Motor. Ein EC-Motor hat den Vorteil, dass dieser durch den Wegfall der Kohlebürsten verschleißärmer ist und darüber hinaus auch das gefürchtete Bürstenfeuer entfällt, was sonst zu großen EMV Problemen führt.

Die Spindelmutter ist vorzugsweise einstückig mit einem Rotor des Elektromotors ausgebildet. Dadurch kann auf eine separate Spindelmutter verzichtet werden. Das AGR-Ventil benötigt somit einen geringen Bauraum.

In einer weiterführenden Ausgestaltung der Erfindung weist das Gehäuse eine Entlüftungsbohrung auf. Durch diese Entlüftungsbohrung kann aggressives Schwitzwasser nach außen abgeführt werden. Dadurch werden die Bauteile weniger stark durch das aggressive Schwitzwasser angegriffen, so dass die Lebensdauer des AGR-Ventils erhöht wird.

Die Entlüftungsbohrung ist vorzugsweise zwischen einer Lippendichtung und einem ventilkörperseitigen Kugellager angeordnet. Dadurch wird in einem Bereich, in welchem sich ein durch das heiße Abgas verursachtes aggressives Schwitzwasser sammelt, abgeführt.

In einer weiteren bevorzugten Ausgestaltung der Erfindung ist eine an einem dem Ventilkörper gegenüberliegenden axialen Ende der Ventilstange angeordnete Verdrehsicherung angeordnet, welche einen Huberkennungsmagneten zur Huberkennung der Ventilstange aufweist, der mit einem Sensor korrespondiert. Über einen dem Huberkennungsmagneten zugeordneten berührungslosen Sensor ist der Hub der Ventilstange messbar. Durch die Verdrehsicherung wird eine rotatorische Bewegung der Ventilstange vermieden. Die Verdrehsicherung an einem dem Ventilkörper gegenüberliegenden axialen Ende der Ventilstange hat zudem den Vorteil, dass diese Montageposition von der entsprechenden axialen Stirnseite des AGR-Ventils eine gute Zugänglichkeit besitzt. Dadurch ist die Verdrehsicherung und der Magnet mit dem Sensor einfach anzubringen.

An axialen Enden der Flachspiralfeder sind vorzugsweise Gleitflächen für die Flachspiralfeder angeordnet. Die erfindungsgemäßen Gleitflächen weisen vorzugsweise zur Flachspiralfeder. Die Gleitflächen ermöglichen eine radiale Bewegung der Windungen beim Spannen oder Entspannen mit geringem Widerstand. Dementsprechend verbessern die Gleitflächen ein Gleiten der Windungen an den Gleitflächen. Dadurch wird der Verschleiß der Flachspiralfeder reduziert.

In einer besonders vorteilhaften Ausführung sind die Gleitflächen durch PTFE-Scheiben gebildet. PTFE-Scheiben weisen sehr gute Gleiteigenschaften auf. Dadurch kann der Verschleiß der Flachspiralfeder weiter reduziert werden. Zudem weisen PTFE-Scheiben eine hohe Lebensdauer auf.

Vorzugsweise ist eine Steckerplatine dem Huberkennungsmagneten gegenüberliegend angeordnet, und die Steckerplatine weist wenigstens einen Hall Sensor auf. Der Hall Sensor ist dadurch dem Huberkennungsmagneten ebenfalls gegenüber angeordnet. Alternativ ist dem Huberkennungsmagneten gegenüberliegend wenigstens ein Hall Sensor im Kunststoff des Gehäuses eingebettet angeordnet. Dadurch ist der Hub der Ventilstange über den Hall Sensor messbar. Die besondere Anordnung des Sensors an der dem Ventilkörper abgewandten Seite der Ventilstange hat zudem den Vorteil, dass keine weitere Platine für den Hall Sensor notwendig ist. Zudem wird keine aufwendige elektrische Verbindung zwischen Hall Sensor und Steckkontakten des Steckers benötigt, um die vom Hall Sensor gemessenen Signale zu übertragen.

Es wird somit ein AGR-Ventil für eine Verbrennungskraftmaschine geschaffen, bei welchem eine rotatorische Hemmung entfällt. Zusätzlich ist aufgrund einer Verringerung der Stellkräfte für die Spindelmutter eine Reduzierung der Größe der Flachspiralfeder und des Elektromotors möglich, wodurch ein sehr kompaktes AGR-Ventil geschaffen wird. Trotz alledem weist das AGR-Ventil eine genauere Einstellbarkeit der Position des Ventilkörpers auf.

Weitere Einzelheiten und Vorteile der vorliegenden Erfindung ergeben sich aus der nachfolgenden Beschreibung der Ausführungsbeispiele in Verbindung mit den Zeichnungen. In diesen zeigen:
Figur: Perspektivische Schnittansicht eines Ausführungsbeispiels eines AGR-Ventils nach der vorliegenden Erfindung.

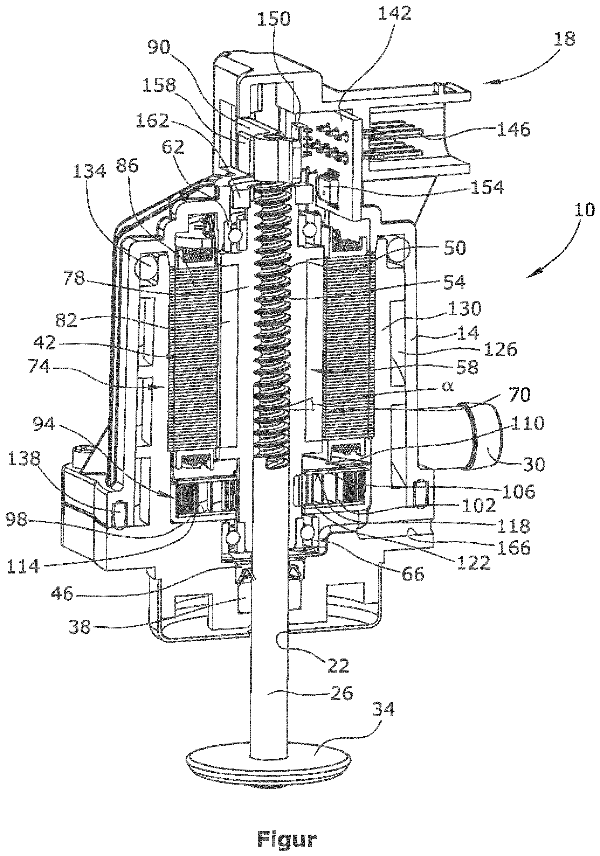

Die Figur zeigt ein Ausführungsbeispiel eines erfindungsgemäßen AGR-Ventils 10 für eine Verbrennungskraftmaschine. Das AGR-Ventil 10 umfasst ein Gehäuse 14, welches einen Stecker 18, über welchen das AGR-Ventil 10 bestrombar ist, ausbildet. Das Gehäuse 14 bildet eine Öffnung 22 aus, durch welche eine Ventilstange 26 ragt, welche teilweise innerhalb des Gehäuses 14 angeordnet ist. An dem Gehäuse 14 ist ein Kühlmittelanschluss 30 ausgebildet, über welchen das AGR-Ventil 10 mit einem Kühlmittel versorgbar ist.

Die Ventilstange 26 weist an einem außerhalb des Gehäuses 14 angeordneten axialen Ende, einen Ventilkörper 34 auf, welcher zur Regelung eines Durchströmquerschnitts auf einen Ventilsitz eines nicht gezeigten Abgaskanals absenkbar ist oder vom Ventilsitz abhebbar ist. Der Ventilkörper 34 ist auf einer dem Ventilsitz zugewandten Seite konisch ausgebildet, um mit dem Ventilsitz eine hohe Dichtigkeit zu gewährleisten.

An einem axialen Ende des Gehäuses 14, an dem die Ventilstange 26 aus dem Gehäuse 14 ragt ist eine Ventilführung 38 ausgebildet, über welche die Ventilstange 26 geführt ist. Zwischen der Ventilführung 38 und einem Innenraum 42 des Gehäuses 14 ist eine Lippendichtung 46 angeordnet, welche einen Bereich zwischen Gehäuse 14 und Ventilstange 26 abdichtet, so dass der Innenraum 42 des Gehäuses 14 vor dem Abgas geschützt ist.

Innerhalb des Gehäuses 14 ist die Ventilstange 26 abschnittsweise als Spindel ausgebildet, welche über ein Außengewinde 50 mit einer ein Innengewinde 54 aufweisenden Spindelmutter 58 mechanisch im Eingriff ist. Die Spindelmutter 58 ist gebildet durch einen über ein steckerseitiges Kugellager 62 und ein ventilkörperseitiges Kugellager 66 gelagerten Rotor 70 eines als EC-Motor ausgebildeten Elektromotors 74.

Der Rotor 70 ist gebildet aus einem Rotorkörper 78, an welchem permanentmagnetische Rotormagnete 82 angeordnet sind. Der Rotor 70 wird von einem den Rotor 70 umfänglich umgebenden Stator 86 angetrieben. An einem dem Ventilkörper 34 gegenüberliegenden axialen Ende der Ventilstange 26 ist eine axial beweglich geführte Verdrehsicherung 90 innerhalb des Gehäuses 14 ausgebildet, welche eine Verdrehung der Ventilstange 26 zum Gehäuse 14 verhindert.

Zwischen dem Gehäuse 14 und der Spindelmutter 58 ist eine Flachspiralfeder 94 mit Windungsberührung derart eingespannt, so dass eine Kraft in Richtung des Ventilsitzes auf die Ventilstange 26 wirkt. Die Flachspiralfeder 94 ist in einem in dem Gehäuse 14 fixierten, axial einseitig offenen, Federhausing 98 angeordnet. Durch die eingespannte Flachspiralfeder 94 wird die Spindelmutter 58, bei ausgeschaltetem Elektromotor 74, zu einer Rotation relativ zum Gehäuse 14 gezwungen, so dass der Ventilkörper 34 auf den Ventilsitz abgesenkt wird. Dadurch wird eine fail-safe-Funktion erreicht, bei der beispielsweise bei ausgefallenem Elektromotor 74, das AGR-Ventil 10 automatisch schließt und somit eine Zufuhr von Abgas zur Verbrennungskraftmaschine unterbricht. Im Gegensatz zu einer Flachspiralfeder mit Windungszwischenraum ermöglicht die Flachspiralfeder 94 mit Windungsberührung eine Mehrzahl von Umdrehungen der Spindelmutter 58 zum Gehäuse 14. Dadurch kann ein Gewindesteigungswinkel α der Spindel klein gewählt werden, so dass die Einstellbarkeit des AGR-Ventils 10 genauer vorgenommen werden kann. Aufgrund der axialen Selbsthemmung wird zusätzlich ein Öffnen durch Abgaspulsationen vermieden.

Zwischen dem Federhausing 98 und der Flachspiralfeder 94 ist an einer axialen Seite der Flachspiralfeder 94 eine erste PTFE-Scheibe 102 angeordnet. Eine zweite PTFE-Scheibe 106 ist über eine Axialfeder 110 auf die zur ersten PTFE-Scheibe 102 axial gegenüberliegende Seite der Flachspiralfeder 94 gepresst, so dass die Flachspiralfeder 94 axial im Gehäuse 14 fixiert ist. Beide PTFE-Scheiben 102, 106 bilden Gleitflächen 114, 118 für die Windungen 122 der Flachspiralfeder 94, so dass ein Gleiten der Windungen 122 in radialer Richtung während des Spannens oder Entspannens der Flachspiralfeder 94 möglich ist.

In dem Gehäuse 14 ist ein den Elektromotor 74 umfänglich umgebender spiralförmiger Kühlkanal 126 ausgebildet, welcher über eine Zwischenwand 130 von dem Innenraum 42 des Gehäuses 14 getrennt ist, und welcher fluidisch mit dem Kühlmittelanschluß 30 verbunden ist. Der Kühlkanal 126 ist über Dichtungen 134, 138 zum Innenraum 42 des Gehäuses 14 und zu einem Außenbereich abgedichtet.

Radial gegenüberliegend zur Verdrehsicherung 90 ist eine Steckerplatine 142 innerhalb des Gehäuses 14 angeordnet. Diese Steckerplatine 142 nimmt Kontakte 146 des Steckers 18, einen ersten Sensor 150 zur Huberkennung der Ventilstange 26 und einen zweiten Sensor 154 zur Rotorfelderkennung auf. Der erste Sensor 150 und der zweite Sensor 154 sind als berührungslose Hall Sensoren ausgebildet. Der erste Sensor 150 misst die axiale Position eines an der Verdrehsicherung 90 angebrachten Huberkennungsmagneten 158. Dadurch kann der Hub der Ventilstange 26 bestimmt werden. Dem zweiten Sensor 154 gegenüberliegend ist an dem Rotor 70 ein Rotorlagemagnet 162 angebracht. Der zweite Sensor 154 misst anhand des Feldes des Rotorlagemagneten 162 die rotatorische Lage des Rotors 70.

Im Bereich der Lippendichtung 46 ist in dem Gehäuse 14 eine Entlüftungsbohrung 166 vorgesehen, welche durch das Gehäuse 14 nach außen führt. Durch diese Entlüftungsbohrung 166 wird aggressives Schwitzwasser, welches die Bauteile angreift, aus dem Zwischenraum zwischen der Lippendichtung 46 und dem ventilkörperseitigem Kugellager 66, nach außen abgeführt.

Das beschriebene erfindungsgemäße AGR-Ventil weist somit keine rotatorische Hemmung der Spindelmutter auf, benötigt einen geringen Bauraum und hat trotz alledem eine verbesserte Einstellbarkeit und ist darüber hinaus nahezu unempfindlich gegen Druckpulsationen.

## Patentansprüche

1. AGR-Ventil (10) für eine Verbrennungskraftmaschine mit:
- einem Gehäuse (14),
- einer Ventilstange (26), welche als Spindel mit einem Außengewinde (50) ausgebildet ist, und welche zumindest teilweise im Gehäuse (14) angeordnet ist,
- einem Ventilkörper (34), der auf der Ventilstange (26) angeordnet ist, und der zur Regelung eines Durchströmungsquerschnitts auf einen Ventilsitz absenkbar ist oder vom Ventilsitz abhebbar ist,
- einem Elektromotor (74), welcher eine Spindelmutter (58) antreibt, die in das Außengewinde (50) der Ventilstange (26) greift,
- ein Federelement (94), welches den Ventilkörper (34) in Richtung des Ventilsitzes belastet,
**dadurch gekennzeichnet, dass**
das Federelement (94) eine Flachspiralfeder mit Windungsberührung ist, welche zwischen der Spindelmutter (58) und dem Gehäuse (14) derart eingespannt ist, dass eine Kraft in Richtung des Ventilsitzes auf die Ventilstange (26) wirkt, wobei das Außengewinde (50) der Ventilstange (26) und ein Innengewinde (54) der Spindelmutter (58) einen Gewindesteigungswinkel (α) von kleiner gleich 15° aufweisen, wobei an einem dem Ventilkörper (34) gegenüberliegenden axialen Ende der Ventilstange (26) eine axial beweglich geführte Verdrehsicherung (90) innerhalb des Gehäuses (14) ausgebildet ist.

2. AGR-Ventil (10) nach Anspruch 1, **dadurch gekennzeichnet, dass** die Flachspiralfeder (94) für 3-9 Umdrehungen der Spindelmutter (58) relativ zum Gehäuse (14) ausgelegt ist.

3. AGR-Ventil (10) nach Anspruch 1 oder 2, **dadurch gekennzeichnet, dass** die Flachspiralfeder (94) zwischen dem Elektromotor (74) und dem Ventilkörper (34) angeordnet ist.

4. AGR-Ventil (10) nach einem der vorherigen Ansprüche, **dadurch gekennzeichnet, dass** in dem Gehäuse (14) Kühlkanäle (126) ausgebildet sind, welche mit einem Kühlkreislauf verbunden sind.

5. AGR-Ventil (10) nach einem der vorherigen Ansprüche, **dadurch gekennzeichnet, dass** der Elektromotor (74) ein EC-Motor ist.

6. AGR-Ventil (10) nach einem der vorherigen Ansprüche, **dadurch gekennzeichnet, dass** die Spindelmutter (58) einstückig mit einem Rotor (70) des Elektromotors (74) ausgebildet ist.

7. AGR-Ventil (10) nach einem der vorherigen Ansprüche, **dadurch gekennzeichnet, dass** das Gehäuse (14) eine Entlüftungsbohrung (166) aufweist.

8. AGR-Ventil (10) nach Anspruch 7, **dadurch gekennzeichnet, dass** die Entlüftungsbohrung (166) zwischen einer Lippendichtung (46) und einem ventilkörperseitigen Kugellager (66) angeordnet ist.

9. AGR-Ventil (10) nach einem der vorherigen Ansprüche, **gekennzeichnet durch** die an einem dem Ventilkörper (34) gegenüberliegenden axialen Ende der Ventilstange (26) angeordnete Verdrehsicherung (90), welche einen Huberkennungsmagneten (158) zur Huberkennung der Ventilstange (26) aufweist, der mit einem Sensor (150) korrespondiert.

10. AGR-Ventil (10) nach einem der vorherigen Ansprüche, **dadurch gekennzeichnet, dass** an axialen Enden der Flachspiralfeder (94) Gleitflächen (114, 118) für die Flachspiralfeder (94) angeordnet sind.

11. AGR-Ventil (10) nach Anspruch 10, **dadurch gekennzeichnet, dass** die Gleitflächen (114, 118) durch PTFE-Scheiben (102, 106) gebildet sind.

12. AGR-Ventil (10) nach einem der Ansprüche 9 bis 11, **dadurch gekennzeichnet, dass** eine Steckerplatine (142) dem Huberkennungsmagneten (158) gegenüberliegend angeordnet ist, und dass die Steckerplatine (142) wenigstens einen Hall Sensor (150, 154) aufweist.

13. AGR-Ventil (10) nach einem der Ansprüche 9 bis 11, **dadurch gekennzeichnet, dass** dem Huberkennungsmagneten (158) gegenüberliegend wenigstens ein Hall Sensor (150, 154) im Kunststoff des Gehäuses (14) eingebettet angeordnet ist.

## Claims

1. EGR valve (10) for an internal combustion engine with:
- a housing (14),
- a valve rod (26), which is configured as a spindle with an external thread (50), and which is arranged at least partially in the housing (14),
- a valve body (34) which is arranged at the valve rod (26) and which can be lowered onto a valve seat or lifted off the valve seat in order to control a flow cross-section,
- an electric motor (74) which drives a spindle nut (58) which engages the external thread (50) of the valve rod (26),
- a spring element (94) which loads the valve body (34) in the direction of the valve seat,
**characterised in that**
the spring element (94) is a flat spiral spring with winding contact, which is clamped between the spindle nut (58) and the housing (14) in such a way that a force acts on the valve rod (26) in the direction of the valve seat, wherein the external thread (50) of the valve rod (26) and an internal thread (54) of the spindle nut (58) comprise a thread pitch angle (α) of less than or equal to 15°, wherein an axially movably guided anti-rotation lock (90) is configured within the housing (14) at an axial end of the valve rod (26) opposite the valve body (34).

2. EGR valve (10) according to claim 1, **characterised in that** the flat spiral spring (94) is designed for 3-9 rotations of the spindle nut (58) relative to the housing (14).

3. EGR valve (10) according to claim 1 or 2, **characterised in that** the flat spiral spring (94) is arranged between the electric motor (74) and the valve body (34).

4. EGR valve (10) according to one of the previous claims, **characterised in that** cooling channels (126) are configured in the housing (14), which are connected to a cooling circuit.

5. EGR valve (10) according to one of the preceding claims, **characterised in that** the electric motor (74) is an EC motor.

6. EGR valve (10) according to one of the preceding claims, **characterised in that** the spindle nut (58) is configured in one piece with a rotor (70) of the electric motor (74).

7. EGR valve (10) according to one of the preceding claims, **characterised in that** the housing (14) comprises a vent hole (166).

8. EGR valve (10) according to claim 7, **characterised in that** the vent hole (166) is arranged between a lip seal (46) and a ball bearing (66) on the valve body side.

9. EGR valve (10) according to one of the preceding claims, **characterised by** the anti-rotation lock (90) being arranged at an axial end of the valve rod (26) opposite the valve body (34) and comprising a stroke detection magnet (158) for stroke detection of the valve rod (26), which corresponds to a sensor (150).

10. EGR valve (10) according to one of the preceding claims, **characterised in that** sliding surfaces (114, 118) for the flat spiral spring (94) are arranged at axial ends of the flat spiral spring (94).

11. EGR valve (10) according to claim 10, **characterised in that** the sliding surfaces (114, 118) are defined by PTFE discs (102, 106).

12. EGR valve (10) according to one of claims 9 to 11, **characterised in that** a connector board (142) is arranged opposite to the stroke detection solenoid (158), and **in that** the connector board (142) comprises at least one Hall sensor (150, 154).

13. EGR valve (10) according to one of claims 9 to 11, **characterised in that** at least one Hall sensor (150, 154) is arranged opposite the stroke detection magnet (158) and is embedded in the plastic of the housing (14).

## Revendications

1. Vanne EGR (10) pour un moteur à combustion interne avec :
- un boîtier (14),
- une tige de vanne (26), qui est conçue comme une broche avec un filetage extérieur (50), et qui est disposée au moins partiellement dans le boîtier (14),
- un corps de vanne (34) qui est disposé sur la tige de vanne (26) et qui peut être abaissé sur un siège de vanne ou soulevé du siège de vanne pour réguler une section transversale d'écoulement,
- un moteur électrique (74) qui entraîne un écrou de tige (58) qui s'engage dans le filetage extérieur (50) de la tige de vanne (26),
- un élément de suspension (94) qui sollicite le corps de vanne (34) en direction du siège de vanne,
**caractérisé en ce que**
l'élément de suspension (94) est un ressort spiral plat avec contact de spire, qui est serré entre l'écrou de tige (58) et le boîtier (14) de telle sorte qu'une force agit sur la tige de vanne (26) en direction du siège de vanne, le filetage extérieur (50) de la tige de vanne (26) et un filetage intérieur (54) de l'écrou de tige (58) comprenant un angle d'inclinaison de filetage (a) inférieur ou égal à 15°, un dispositif anti-rotation (90) guidé de manière mobile axialement étant formé à l'intérieur du boîtier (14) à une extrémité axiale de la tige de vanne (26) opposée au corps de vanne (34).

2. Vanne EGR (10) selon la revendication 1, **caractérisée en ce que** le ressort spiral plat (94) est conçu pour 3 à 9 rotations de l'écrou de tige (58) par rapport au boîtier (14).

3. Vanne EGR (10) selon la revendication 1 ou 2, **caractérisée en ce que** le ressort spiral plat (94) est disposé entre le moteur électrique (74) et le corps de vanne (34).

4. Vanne EGR (10) selon l'une des revendications précédentes, **caractérisée en ce que** des conduits de refroidissement (126) sont formés dans le boîtier (14), lesquels sont reliés à un circuit de refroidissement.

5. Vanne EGR (10) selon l'une des revendications précédentes, **caractérisée en ce que** le moteur électrique (74) est un moteur EC.

6. Vanne EGR (10) selon l'une des revendications précédentes, **caractérisée en ce que** l'écrou de tige (58) est formé d'une seule pièce avec un rotor (70) du moteur électrique (74).

7. Vanne EGR (10) selon l'une des revendications précédentes, **caractérisée en ce que** le boîtier (14) comprend un orifice de ventilation (166).

8. Vanne EGR (10) selon la revendication 7, **caractérisée en ce que** l'alésage de purge (166) est disposé entre un joint à lèvre (46) et un roulement à billes (66) côté corps de vanne.

9. Vanne EGR (10) selon l'une des revendications précédentes, **caractérisée par** le dispositif anti-rotation (90) disposé à une extrémité axiale de la tige de vanne (26) opposée au corps de vanne (34), lequel comprend un aimant de détection de course (158) pour la détection de la course de la tige de vanne (26), qui correspond à un capteur (150).

10. Vanne EGR (10) selon l'une des revendications précédentes, **caractérisée en ce qu'**aux extrémités axiales du ressort spiral plat (94) sont disposées des surfaces de glissement (114, 118) pour le ressort spiral plat (94).

11. Vanne EGR (10) selon la revendication 10, **caractérisée en ce que** les surfaces de glissement (114, 118) sont réalisées par des rondelles en PTFE (102, 106).

12. Vanne EGR (10) selon l'une des revendications 9 à 11, **caractérisée en ce qu'**une platine de connexion (142) est disposée en face de l'aimant de détection de course (158), et **en ce que** la platine de connexion (142) comprend au moins un capteur Hall (150, 154).

13. Vanne EGR (10) selon l'une des revendications 9 à 11, **caractérisée en ce qu'**au moins un capteur Hall (150, 154) est disposé en face de l'aimant de détection de course (158), noyé dans la matière plastique du boîtier (14).
